# EUROPÄISCHE PATENTSCHRIFT

(11) **EP 1 072 620 B1**
(45) Veröffentlichungstag und Bekanntmachung des Hinweises auf die Patenterteilung: **21.09.2005**
(21) Anmeldenummer: 00115031.7
(22) Anmeldetag: 25.07.2000
(51) Int. Cl.: C08G 18/12, C08G 18/20, C08G 18/48, C08G 18/50, C09J 175/08

(54) **Klebstoffzusammensetzung für Keilzinkenverleimung**
Adhesive composition for finger joint glueing
Composition adhésive pour coller des assemblages en dents de scie

(30) Priorität: 28.07.1999 DE 19935489
(43) Veröffentlichungstag der Anmeldung: 31.01.2001
(73) Patentinhaber: BASF Aktiengesellschaft, 67056 Ludwigshafen (DE)
(72) Erfinder: Keppler, Uwe, Dr., 67126 Hochdorf-Assenheim (DE); Pfütze, Eberhard, Dr., 55299 Nackenheim (DE)
(74) Vertreter: Isenbruck, Günter

(56) Entgegenhaltungen:
- DE-A- 4 032 191
- DE-A- 4 412 759
- US-A- 5 550 191

## Beschreibung

Die Erfindung betrifft eine Klebstoffzusammensetzung, ein Verfahren zur Herstellung der selben, einen diese enthaltenden Verbund sowie die Verwendung der Klebstoffzusammensetzung oder des Verbundes im Hoch-, Tief-, Schiffs-, Flugzeug- oder Fahrzeugbau.

Holz ist beispielsweise ein anerkannter und bewährter Werkstoff im konstruktiven Hochbau. Für die Ausführungen größerer Spannweiten, als es einzelne geschnittenen Balken erlauben, wird Brettschichtholz eingesetzt. Brettschichtholz wird durch vorzugsweise vollflächiges Verleimen einzelner Brettlamellen industriell gefertigt. Durch geleimte Verbindungen kurzer Holzlamellen in Längsrichtung, die sogenannte Keilzinkenverbindung, ist es möglich, praktisch unendlich lange Einzellamellen zu fertigen, die auf die benötigte Baugröße gekappt werden. Neben größeren Dimensionen bietet die Verleimung eine Vergütung des Naturstoffes Holz, da naturgegebene Fehlstellen wie Äste ausgekappt und das Schwinden und Quellen des Holzes infolge Klimaveränderungen erheblich vermindert werden.

Für derartige Zwecke werden derzeit in der Regel Klebstoffzusammensetzungen eingesetzt, die hauptsächlich auf Phenol/Resorcin- bzw. Melamin/Harnstoff-Harzen basieren.

Die heute überwiegend im Einsatz befindlichen Leimsysteme sind Amino- und Phenoplaste, die in einer Polykondensationsreaktion zur fertigen Leimfuge aushärten. Die chemische Aushärtungsreaktion dieser überwiegend in zwei Komponenten vorliegenden Systeme wird durch Vermischung von Leim und Härter zur Leimflotte gestartet. Bei Aminoplasten erfolgt die Härtungsinitiierung zumeist durch Absenkung des pH-Wertes, bei Phenoplasten durch Zugabe von Formaldehyd oder Paraformaldehyd. Auch in der fertigen Leimfuge liegt noch freier Formaldehyd in geringen Mengen vor, der über einen längeren Zeitraum an die Umgebungsluft abgegeben werden kann. Formaldehyd steht jedoch im Verdacht gesundheitliche Schädigungen zu verursachen.

Aus DE 441 27 59 A1 ist eine formaldehydfreie, Füllstoffe enthaltende Klebstoffzusammensetzung, basierend auf einem isocyanathaltigen Polyurethan-Präpolymeren, bekannt. Diese Klebstoffzusammensetzung weist insbesondere eine für die Verarbeitung wenig geeignete Viskosität und praxisfremde Preßzeiten auf. Die Viskosität ist insbesondere für die Pumpfähigkeit und die Fähigkeit der Klebstoffzusammensetzung in das zu verklebende Substrat einzudringen von großer Bedeutung (Adhäsion).

Füllstoffhaltige Klebstoffzusammensetzungen sind insbesondere bei der maschinellen Verklebung von Oberflächen nachteilhaft, die enge und tiefe Einschnitte aufweisen. Eine derartige Oberfläche ist beispielsweise bei der Keilzinkenverleimung nach DIN 68140 Teil 1 anzutreffen. Hierbei sind die Zinken in der Regel in ihrem Querschnitt als spitze Dreiecke ausgebildet, so daß ein gleichfalls spitzer, dreieckiger Einschnitt von jeweils einem Schenkel zweier benachbarter Zinken gebildet wird. Zum Auftragen einer Klebstoffzusammensetzung auf die Schenkelflächen der Zinken wird in der Regel ein durch die Einschnitte kämmendes Werkzeug verwendet, dessen klebstoffauftragender Bereich in seiner Form den Einschnitten angepaßt ist. Allgemein wird die Klebstoffzusammensetzung aus den Flanken dieses Auftragkammes, die meist in etwa die gleiche Länge wie die Schenkel aufweisen, mittels in diesem Bereich angeordneten Schlitzen ausgebracht.

Beim Ausbringen einer füllstoffhaltigen Klebstoffzusammensetzung kommt es recht häufig zum Verstopfen dieser Schlitze und darüber hinaus zur Ausbildung von Ablagerungen, die von der füllstoffhaltigen Klebstoffzusammensetzung herrühren. Zunächst ist aufgrund dieser Verstopfungen und Ablagerungen eine häufige Reinigung und damit ein Betriebsstillstand der entsprechenden Anlage notwendig. Ferner führen insbesondere die Verstopfungen dazu, daß ein oder mehrere Zinken eines zu verleimenden Werkstückes nicht mit Klebstoffzusammensetzung versehen werden. Dieses kann zu erheblichen Unterschieden der Festigkeit der Keilzinkenverleimung führen, wodurch die Qualität des Produktes erheblich gemindert ist.

Eine Aufgabe der vorliegenden Erfindung ist deshalb, eine Klebstoffzusammensetzung zur Verfügung zu stellen, die die mit dem Verstopfen und der Bildung von Ablagerungen verbunden Nachteile nicht aufweist. Darüber hinaus soll eine derartige Klebstoffzusammensetzung keine Formaldehyd-Emissionen aufweisen. Zudem muß diese Klebstoffzusammensetzung eine gute Pumpfähigkeit, Verarbeitbarkeit und Lagerstabilität zeigen. Außerdem besteht die Aufgabe ferner darin, daß die erfindungsgemäß bereitgestellte Klebstoffzusammensetzung den vor allen Dingen im Hoch- und Tiefbau bestehenden Anforderungen, die insbesondere von staatlichen Prüfungsanstalten gestellt werden, mindestens genauso genügt, wie die bisher eingesetzten Klebstoffzusammensetzungen, insbesondere die auf Phenol/Resorcin- bzw. Melamin/Harnstoff-Harzen oder auf einem isocyanathaltigen Polyurethan-Präpolymer sowie Füllstoffen basierenden Klebstoffzusammensetzungen bei vergleichbaren Anwendungen.

Die vorstehenden Aufgaben werden gelöst durch eine lösungsmittelarme, füllstofffreie Klebstoffzusammensetzung nach Anspruch 1. Diese enthält als Bestandteile mindestens:
- bis zu 99,999 Gew.-% der Klebstoffzusammensetzung eines Präpolymers, erhältlich aus mindestens einer eine gegenüber Isocyanaten reaktive Verbindung aufweisenden Komponente A und mindestens einer ein Isocyanat aufweisenden Komponente B,
- 0 bis 20 Gew.-% übliche Zusatz- und Hilfsstoffe,
   0,001 bis 10 Gew.-% mindestens eines Morpholinderivats als Aktivator,
wobei kein Füllstoff als Bestandteil enthalten ist.

Erfindungsgemäß ist es bevorzugt, daß die Klebstoffzusammensetzung im Bereich von 70 bis 99,99, bevorzugt 80 bis 99,99 und besonders bevorzugt 85 bis 99,99 Gew.-% des Präpolymers und 0,01 bis 5, bevorzugt 0,01 bis 3 und besonders bevorzugt 0,01 bis 1 Gew.-% des Aktivators und gegebenenfalls als Rest, bis insgesamt 100 Gew.-%, weitere Zusatz- und Hilfsstoffe, jeweils bezogen auf die Klebstoffzusammensetzung, aufweist.

Weiterhin sind bei der erfindungsgemäßen Klebstoffzusammensetzung folgende Hauptmerkmale erfüllt:
(a) das Präpolymer weist mindestens eines der folgenden Untermerkmale auf:
   (i) einen NCO-Gehalt von 5 bis 30, bevorzugt 10 bis 20 und besonders bevorzugt 13 bis 17 Gew.-%, bezogen auf das Präpolymer,
   (ii) eine Viskosität bei 25 °C im Bereich von 300 bis 15.000 mPas,
(b) die Komponente A weist mindestens eines der folgenden Untermerkmale auf:
   (i) Komponente A enthält mindestens ein Diol, vorzugsweise ein Diol oder Triol,
   (ii) die OH-Zahl der Komponente A liegt im Bereich von 10 bis 500, bevorzugt 20 bis 300 und besonders bevorzugt von 30 bis 200 mg KOH/g.

Die Viskosität bei 25 °C des Präpolymers liegt in einem Bereich zwischen 300 und 15.000, bevorzugt 500 und 10.000 mPas, wenn die Klebstoffzusammensetzung pumpbar sein soll.

Weiterhin ist erfindungsgemäß die Klebstoffzusammensetzung lösungsmittelarm. Dieses ist dann der Fall, wenn die in der Klebstoffzusammensetzung enthaltene Lösungsmittelmenge < 10, bevorzugt < 5 und besonders bevorzugt < 2 Gew.-% beträgt. Lösungsmittel sind erfindungsgemäß organische und anorganische Flüssigkeiten, die sich als Träger der übrigen Bestandteile der Klebstoffzusammensetzung eignen und nicht mit zumindest einem Teil der anderen Bestandteile aushärten sondern von dem ausgehärteten Klebstoff entfernbar sind. Weiterhin ist die erfindungsgemäße Klebstoffzusammensetzung vorzugsweise lösungsmittelfrei.

Der Aktivator der erfindungsgemäßen Klebstoffzusammensetzung besteht mindestens aus einem Morpholinderivat. Als Morpholinderivate besonders geeignet sind 4-Methylmorpholin, 4-Ethylmorpholin, 4-Cyclohexylmorpholin, 2,2'-Dimorpholinodiethylether oder Dimorpholinopolyethylenglykol, oder mindestens zwei davon. Weiterhin können neben dem Morpholinderivat weitere aktivierend wirkende Verbindungen, wie sie beispielsweise als Polyurethan-Katalysatoren in Becker/Braun, Kunststoffhandbuch 7 (1993) beschrieben sind, verwendet werden, wobei vorzugsweise der Mengenanteil der Morpholinderivate überwiegt.

Weiterhin können auch thixotropierende Hilfsmittel der Klebstoffzusammensetzung zugefügt werden. Hierbei ist es bevorzugt, daß die thixotropierenden Hilfsmittel nicht als Feststoffe vorliegen, die sich als Füllkörper eignen würden. Somit sind insbesondere lösliche thixotropierende Hilfsmittel bevorzugt, die beispielsweise über die Umsetzung eines Isocyanats in Gegenwart von Aminen gewonnen werden können, wie es in den Druckschriften EP 300 388 A1, DD 156 480, DD 211 689, DD 211 930 und DD 211 931 beschrieben ist.

In einer weiteren erfindungsgemäß bevorzugten Ausführungsform der Klebstoffzusammensetzung werden thixotropierende Hilfsmittel eingesetzt, wobei es besonders bevorzugt ist, daß neben den thixotropierenden Hilfsmittel keine Füllstoffe eingesetzt werden.

Bei thixotropierenden Hilfsmitteln handelt es sich um kleinstteilige Stoffe, die Flüssigkeiten bereits verdicken, wenn sie in geringen Mengen der Flüssigkeit, beispielsweise bis maximal 10 Gew.-%, bezogen auf die Flüssigkeit, zugesetzt werden. Vorzugsweise besitzen diese kleinen Teilchen an ihrer Oberfläche Silanogruppen, die mit der Flüssigkeit, mit der sie dispergiert werden, unter Ausbildung von Wasserstoffbrückenbindungen in Wechselwirkung treten und somit zu einer Verdickung dieser Flüssigkeit führen. Typisch für thixotropierende Hilfsmittel ist, daß bei gleicher Menge die Verdickungswirkung mit abnehmender Teilchengröße bei entsprechend sorgfältiger Dispergierung durch starkes Mischen steigt. Weiterhin weisen die thixotropierenden Hilfsmittel den Vorteil auf, daß sie in der dispergierten Flüssigkeit nicht sedimentieren. Als Materialien für thixotropierende Hilfsmittel sind in feiner Pulverform Montmorillonit, Mg/Al-Silikat, Al/Na-Silikat, Bentonite, Hectorit, Na/Mg-Silikat, pyrogene Kieselsäuren, hydratisierte Kieselsäuren, Hornblende-Chrysotil, Chrysotil-Asbest, Chrysotil-Kieselsäure sowie gefälltes MgO bevorzugt, wobei pyrogene Kieselsäuren, beispielsweise erhältlich als Aerosil der Degussa-Hüls AG, und Mg-Silikate, erhältlich als Bentone von Kronos Titan GmbH Leverkusen, bevorzugt sind und Aerosil besonders bevorzugt ist.

Die erfindungsgemäße Klebstoffzusammensetzung wird dadurch hergestellt, indem die zuvor definierten Bestandteile miteinander in Kontakt gebracht werden. Dieses geschieht vorzugsweise in Gegenwart von Mischeinrichtungen, wobei sowohl dynamische als auch statische, vorzugsweise dynamische, Mischeinrichtungen eingesetzt werden können.

Vorzugsweise wird das erfindungsgemäße Präpolymer dadurch erhalten, indem die Komponente B vorgelegt und die Komponente A, in einem Temperaturbereich zwischen 20 und 120, bevorzugt 40 bis 100 und besonders bevorzugt 60 bis 90 °C in einem Reaktor mit Mischaggregat zugegeben wird.

Die Bestandteile werden vorzugsweise durch die Mischeinrichtungen so ausgiebig miteinander vermischt, daß eine möglichst homogene Klebstoffzusammensetzung aus den Bestandteilen erhältlich ist.

Die erfindungsgemäße Klebstoffzusammensetzung weist mindestens eine der folgenden Materialeigenschaften auf:
(A) Viskosität bei 25 °C im Bereich von 300 bis 15.000 mPas,
(B) rheologische Aushärtezeit im Bereich von 10 bis 150, bevorzugt 30 bis 100 und besonders bevorzugt 45 bis 70 Minuten,
(C) Lagerstabilität von 1 bis 4, bevorzugt 2 bis 6 und besonders bevorzugt 3 bis 8 Monaten,
(D) NCO-Gehalt im Bereich von 3 bis 30, bevorzugt 5 bis 20 und besonders bevorzugt von 6 bis 18 Gew.-%, bezogen auf die Klebstoffzusammensetzung,
(E) Mindespreßzeit gemäß DIN 68141 im Bereich von 15 bis 150, bevorzugt 15 bis 100 und besonders bevorzugt 15 bis 75 Minuten.

Die Viskosität bei 25 °C der Klebstoffzusammensetzung liegt in einem Bereich von 300 bis 15.000, bevorzugt 500 bis 10.000 mPas für pumpfähige Klebstoffzusammensetzungen.

Die Lagerstabilität der Klebstoffzusammensetzung wird über die Viskosität der Klebstoffzusammensetzung bestimmt. Die Lagerstabilität liegt dann vor, wenn in einem Alterungs-Schnelltest die Viskosität bei 25°C der Klebstoffzusammensetzung nach einer Lagerung über einen gegebenen Zeitraum unter Ausschluß von Luft und Feuchtigkeit nicht um mehr als 20% gegenüber dem Wert vor der Lagerung angestiegen ist.

Erfindungsgemäß liegt die Verarbeitbarkeit dann vor, wenn sich über eine Betriebszeit von 8 Stunden keine Ablagerung von Klebstoffzusammensetzungs-Resten an der kammartigen Auftragsvorrichtung für die Keilzinkenverleimung ergibt.

Eine bevorzugte Ausführungsform der erfindungsgemäßen Klebstoffzusammensetzung weist von den vorgenannten Merkmalen mindestens die Viskosität (A) und die Lagerstabilität (C) auf.

Ferner weist eine Ausführungsform der erfindungsgemäßen Klebstoffzusammensetzung von den vorgenannten Materialeigenschaften mindestens die Viskosität (A), die Lagerstabilität (C) und den NCO-Gehalt (D) auf.

Weiterhin weist eine Ausführungsform der erfindungsgemäßen Klebstoffzusammensetzung von den vorgenannten Materialeigenschaften mindestens die Viskosität (A), die Lagerstabilität (C) und den NCO-Gehalt (D) sowie die Mindestpreßzeit (E) auf.

Eine andere bevorzugte Ausführungsform der erfindungsgemäßen Klebstoffzusammensetzung weist alle der vorgenannten Materialeigenschaften (A) bis (E) auf.

Weiterhin betrifft die Erfindung einen Verbund, der mindestens ein Substrat und eine erfindungsgemäße Klebstoffzusammensetzung enthält. Das Substrat ist vorzugsweise ein cellulosehaltiges Material. Als cellulosehaltige Materialien kommen alle dem Fachmann bekannten natürlich vorkommenden und künstlich gefertigten Materialien in Betracht. Als natürlich vorkommende Materialien seien insbesondere Hölzer verschiedener Bäume, beispielsweise Nadelhölzer oder Laubhölzer, genannt. Künstliche, cellulosehaltige Materialien sind beispielsweise Papiere, Pappen, Laminate, Preßspanplatten und dergleichen. Als Substrate kommen gleichfalls Materialien in Betracht, die sich in ähnlicher Weise wie die cellulosehaltigen Materialien mit der erfindungsgemäßen Klebstoffzusammensetzung verkleben lassen.

Ein bevorzugter Verbund sind Endlosholzbretter, die aus mindestens zwei an ihren Endstücken miteinander über eine Keilzinkenverbindung verbundenen Einzelbrettern bestehen, wobei die Keilzinken mittels der erfindungsgemäßen Klebstoffzusammensetzung verbunden sind.

Ein weiterhin erfindungsgemäß bevorzugter Verbund sind Brettschichthölzer, die aus einer Vielzahl von flächig verleimten Einzelbrettern bestehen, wobei die Bretter untereinander zumindest teilweise, vorzugsweise ganz, mittels der erfindungsgemäßen Klebstoffzusammensetzung verbunden sind. Anstelle von Einzelbrettern können auch Endlosholzbretter verwendet werden.

Die erfindungsgemäße Klebstoffzusammensetzung eignet sich besonders für die Herstellung von keilzinkenverleimten Holzbrettern.

Weiterhin ist es bevorzugt, daß der erfindungsgemäße Verbund, insbesondere wenn es sich um keilzinkenverleimte Holzbretter handelt, die folgende Materialeigenschaft aufweist:
(F) eine Biegefestigkeit gemäß der Durchführungsrichtlinien der Gütegemeinschaft BS-Holz RAL RG 421 im Bereich von 20 bis 70 N/mm².

Die Biegefestigkeit der Keilzinkenbiegeprüfung für Lamellen der nachfolgenden Sortierklassen sind besonders bevorzugt:
- für Lamellen der Sortierklasse S 10, MS 10 ≥ 30 N/mm²
- für Lamellen der Sortierklasse S13 ≥ 3 5 N/mm²
- für Lamellen der Sortierklasse MS13 ≥ 40 N/mm²
- für Lamellen der Sortierklasse MS 17 ≥ 45 N/mm²

Die Biegefestigkeit der üblicherweise für die Herstellung von Breitschichthölzern verwendeten Holzart Fichte liegt im Bereich von 65 bis 70 N/mm².

Die erfindungsgemäßen Verbunde eignen sich neben dem Einsatz als tragender Bestandteil von Dach-, Brücken- und Deckenkonstruktionen gleichfalls beim Herstellen von Betonschalungen, insbesondere als Betonschalungsträger sowie im Gerüstbau, insbesondere als Gerüstbeläge.

Weiterhin ist es bevorzugt, daß der erfindungsgemäße Verbund, vorzugsweise mit Flächenverleimungen, mindestens eine, vorzugsweise alle der folgenden Materialeigenschaft(en) aufweist:
(G) eine Delaminierungsbeständigkeit nach DIN EN 302 Teil 2 von maximal 5 % nach DIN EN 301, bevorzugt maximal 2 % und besonders bevorzugt maximal 1 %,
(H) eine Trockenscherfestigkeit im Bereich von mindestens 6 N/mm² bis Substratbruch nach den Güterichtlinien der RAL-Gütegemeinschaft Holzleimbau.

Die Substratbruch- und Scherfestigkeitswerte für verschiedene Holzarten sind dem Holzlexikon DRW-Verlag, 3. Auflage 1988 zu entnehmen. Der Substratbruch der üblicherweise verwendeten Holzart Fichte beträgt circa 7,5 N/mm².

Bei der Herstellung des Präpolymers der erfindungsgemäßen Klebstoffzusammensetzung werden die Komponenten A und B bevorzugt in einem derartigen Verhältnis eingesetzt, daß die vorbeschriebenen Eigenschaften des Präpolymers, insbesondere der NCO-Gehalt und die Viskosität erreicht werden. Zusätzlich können zur Herstellung des Präpolymers Hilfs- und Zusatzstoffe oder Katalysatoren eingesetzt werden.

Die weiteren Ausgangsstoffe bzw. Komponenten für die Herstellung der Präpolymer- und Klebstoffzusammensetzung werden im folgenden beispielhaft beschrieben:

Als gegenüber Isocyanaten reaktive Verbindungen, nämlich Komponente A, können zweckmäßigerweise solche mit einer Funktionalität von 2 bis 8, vorzugsweise 2 bis 6, und einem Molekulargewicht von 60 bis 10.000 verwendet werden, die als gegenüber Isocyanaten reaktive Gruppen Hydroxyl-, Thiol- und/oder primäre und/oder sekundäre Aminogruppen aufweisen. Bewährt haben sich z. B. Polyole, ausgewählt aus der Gruppe der Polyetherole sowie Polyesterole, Polythioetherpolyole, hydroxylgruppenhaltige Polyacetale und hydroxylgruppenhaltige aliphatische Polycarbonate, Polycarbonatdiole sowie Polycaprolactondiole oder Mischungen aus mindestens zwei der genannten Polyole. Vorzugsweise Anwendung finden Polyesterole und/oder Polyetherole. Die Hydroxylzahl der Polyhydroxylverbindungen beträgt dabei in aller Regel 20 bis 850 mg KOH/g und vorzugsweise 25 bis 500 mg KOH/g.

Als gegenüber Isocyanaten reaktive Verbindungen können auch Diole und/oder Triole mit Molekulargewichten von 60 bis < 400 als Kettenverlängerungs- und/oder Vernetzungsmittel bei dem erfindungsgemäßen Verfahren eingesetzt werden. Zur Modifizierung der mechanischen Eigenschaften, z. B. der Härte, und zur Erhöhung der Stabilität des Präpolymers kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 g/mol auf. In Betracht kommen beispielsweise aliphatische, cycloaliphatische und/oder araliphatische Diole mit 2 bis 14, vorzugsweise 4 bis 10 Kohlenstoffatomen, z. B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als Polyolkomponenten können allgemein auch hochfunktionelle Polyole, insbesondere Polyetherole auf Basis hochfunktioneller Alkohole, Zuckeralkohole und/oder Saccharide als Startermoleküle verwendet werden. Vorzugsweise werden jedoch 2- und/oder 3-funktionelle Polyether- bzw. Polyesterole auf Basis Glyzerin und/oder Trimethylolpropan und/oder Glykolen als Startermoleküle bzw. zu veresternde Alkohole eingesetzt. Die Herstellung der Polyetherole erfolgt dabei nach einer bekannten Technologie. Geeignete Alkylenoxide zur Herstellung der Polyole sind beispielsweise Tetrahydrofuran, Ethylenoxid, 1,3-Propylenoxid, 1,2- bzw. 2,3-Butylenoxid, Styroloxid, vorzugsweise Ethylenoxid und 1,2-Propylenoxid. Die Alkylenoxide können einzeln, alternierend nacheinander oder als Mischungen verwendet werden. Besonders bevorzugt werden in dem Präpolymer in der erfindungsgemäßen Klebstoffzusammensetzung als Polyetherole solche eingesetzt, die zum Abschluß der Alkoxylierung mit Ethylenoxid alkoxyliert wurden und damit primäre Hydroxylgruppen aufweisen.

Als Startermoleküle kommen beispielsweise in Betracht: Wasser, Glykole, wie Ethlyenglykol, Propylenglykol, 1,4-Butandiol und 1,6-Hexandiol, Amine, wie Ethylendiamin, Hexamethylendiamin, und 4,4'-Diaminodiphenylmethan und Aminoalkohole, wie Ethanolamin oder Triethanolamin.

Die Polyetherole besitzen eine Funktionalität von vorzugsweise 2 bis 6 und insbesondere 2 bis 3 und Molekulargewichte von 400 bis 10.000, vorzugsweise 1.000 bis 7.000. Die Polyetherole können allein oder in Mischungen verwendet werden.

Polycarbonatdiole sind ebenfalls geeignet. Als Polycarbonatdiole kommen solche mit aromatischer Dihydroxyverbindungen, z. B. auf Basis 4,4'-Dihydroxydiphenyl-2,2-propan oder solche auf Basis aliphatischer Dihydroxyverbindungen, z. B. 1,6-Hexandiol, in Frage. Die Molmassen erstrecken sich von 500 bis 4.000, vorzugsweise von 1.000 bis 2.000.

Geeignete Polyesterole als Polyolkomponente können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen oder durch Polymerisation von Lactonen mit 3 bis 20 Kohlenstoffatomen hergestellt werden. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z. B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimenthylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan; 1,4-Diethanolcyclohexan, ethoxylierte/propoxylierte Produkte des 2,2-Bis-(4-hydroxy-phenylen)-propan (Bisphenol A). Je nach den gewünschten Eigenschaften der Polyurethane können die Polyole alleine oder als Mischung in verschiedenen Mengenverhältnissen verwendet werden. Als Lactone für die Herstellung der Polyesterole eignen sich z. B. α,α-Dimethyl-β-propiolacton, γ-Butyrolacton und vorzugsweise ε-Caprolacton. Die Polyesterole besitzen vorzugsweise eine Funktionalität von 2 bis 4, insbesondere 2 bis 3, und ein Molekulargewicht von 1.200 bis 3.000, vorzugsweise 1.500 bis 3.000 und insbesondere 1.500 bis 2.500.

Erfindungsgemäß haben sich für das Präpolymer insbesondere Polyolgemische bewährt. Derartige Polyolgemische weisen mindestens ein Diol, vorzugsweise Polypropylenglykol und mindestens ein Triol, vorzugsweise Polyethertriol auf. Besonders geeignete Diole weisen ein mittleres Molekulargewicht im Bereich von 500 bis 3.000, bevorzugt 700 bis 1.500 und besonders bevorzugt 800 bis 1.500 und darüber hinaus bevorzugt 800 bis 1.200 auf. Als Triol haben sich solche mit einem mittleren Molekulargewicht von 1.000 bis 8.000, bevorzugt 2.000 bis 6.000 und besonders bevorzugt 3.000 bis 5.000 bewährt. Besonders bevorzugt ist es, daß das Polyolgemisch eine OH-Zahl im Bereich von 30 bis 140, bevorzugt 50 bis 90 und besonders bevorzugt 60 bis 80 mg KOH/g aufweist. Die vorgenannten Diole und Triole können nicht nur als Polyolgemisch sondern auch jeweils für sich zur Herstellung des Präpolymers eingesetzt werden.

In einer anderen Ausführungsform des erfindungsgemäßen Präpolymers hat sich der Einsatz eines Polyetherpolyols, das vorzugsweise primäre Hydroxylgruppen aufweist, mit einer OH-Zahl im Bereich von 10 bis 60, bevorzugt 20 bis 40 und besonders bevorzugt 25 bis 35 mg KOH/g bewährt.

Sofern zur Herstellung der Präpolymere Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.-%, bezogen auf das Gewicht der insgesamt eingesetzten, gegenüber Isocyanaten reaktiven Verbindungen zum Einsatz.

Als Isocyanate bzw. Polyisocyanate der Komponente B kommen die an sich bekannten aliphatischen, cycloaliphatischen, araliphatischen und/oder aromatischen Isocyanate, bevorzugt Diisocyanate, in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen mit Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder -1,4-diisocyanat, 2,4- und 2,6-Hexahydro-toluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanotomethylcyclohexan (IPDI), 2,4- und/oder 2,6-Toluylendiisocyanat, 4,4'-, 2,4' und/oder 2,2'-Diphenylmethandiisocyanat (monomeres MDI), Polyphenylpolymethylenpolyisocyanate, (Polymer-MDI) und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Erfindungsgemäß besonders bevorzugt für die Herstellung des Präpolymers der erfindungsgemäßen Klebstoffzusammensetzung ist MDI, wie Polymer-MDI oder vorzugsweise Monomer-MDI, insbesondere 4,4'-MDI, oder Mischungen aus 2,4'-MDI und 4,4'-MDI.

In einer erfindungsgemäßen Ausführungsform hat sich für das Präpolymer als besonders geeignet erwiesen ein Polymer-MDI mit einer mittleren Funktionalität im Bereich von 1 bis 5, bevorzugt 1,5 bis 4 und besonders bevorzugt 2 bis 3,5 und einer Viskosität im Bereich von 100 bis 400, bevorzugt 150 bis 300 und besonders bevorzugt 160 bis 260 mPas zu verwenden.

Als Katalysatoren können allgemein bekannte Verbindungen eingesetzt werden, welche die Reaktion von Isocyanaten mit den gegenüber Isocyanaten reaktiven Verbindungen stark beschleunigen, wobei vorzugsweise ein Gesamtkatalysatorgehalt von 0,01 bis 8 Gew.-%, insbesondere 0,1 bis 5 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)-ethanol, N,N',N-Tris-(dialkylaminoalkyl)hexahydrotriazine, z. B. N,N',N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibuthylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat und/oder Alkalisalze von langkettigen Fettsäuren mit 10 bis 20 Kohlenstoffatomen und gegebenenfalls seitenständigen OH-Gruppen. Weiterhin sind Trimerisierungskatalysatoren wie Alkali- oder Erdalkaliacetat, vorzugsweise Kaliumacetat, zu nennen. Die vorstehenden Katalysatoren können auch zusätzlich als Aktivator zu den als Aktivatoren eingesetzten Morpholinderivaten verwendet werden. Somit werden Katalysatoren in das Präpolymer als solches bei dessen Herstellung und Aktivatoren mit dem Präpolymer als zusätzlicher Bestandteil der erfindungsgemäßen Klebstoffzusammensetzung in diese eingearbeitet. Weiterhin haben sich als Katalysatoren bzw. Aktivatoren Ti-Verbindungen, insbesondere Ti(IV)-O-Alkylverbindungen, mit Alkylgruppen wie Methyl, Ethyl, n-Propyl, Isopropyl, n-Butyl, Isobutyl, tert.-Butyl, n-Penty, 2-Pentyl, 3-Pentyl, bevorzugt Ethyl, n-Propyl, Isopropyl, n-Butyl, Isobutyl, tert.-Butyl und besonders bevorzugt Ti(IV)butylat, bewährt.

Der Reaktionsmischung zur Herstellung der Präpolymere können gegebenenfalls noch weitere Hilfsmittel und/oder Zusatzstoffe zugesetzt werden. Genannt seien beispielsweise oberflächenaktive Substanzen, Stabilisatoren, Zellregler, Farbstoffe, Pigmente, Flammschutzmittel, Hydrolyseschutzmittel, fungistatische und bakteriostatisch wirkende Substanzen. Die oberflächenaktiven Substanzen und Stabilisatoren wirken einer "Hautbildung" der der Luft zugewandten Oberfläche der Klebstoffzusammensetzung entgegen. Weiterhin verbessern die oberflächenaktiven Substanzen sowie Stabilisatoren das Verlaufen der Klebstoffzusammensetzung sowie die Kriechfähigkeit der Klebstoffzusammensetzung und das Entgasen derselben. Als oberflächenaktive Substanzen kommen z. B. Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Stabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkisch Rotöl und Erdnußöl, und Zellregler, wie Paraffine, Fettalkohole und Dimethylpolysiloxane. Zur Verbesserung der Emulgierwirkung, der Zellstruktur und/oder Stabilisierung des Präpolymeren eignen sich ferner die oben beschriebenen oligomeren Acrylate mit Polyoxyalkylen- und Fluoralkanresten als Seitengruppen. Wenn eine Schaumbildung verringert oder vermieden werden soll, sind als Entschäumer Trialkylphosphate bevorzugt. Diese besitzen vorzugsweise Alkylgruppen wie Methyl, Ethyl, n-Propyl, Isopropyl, n-Butyl, Isobutyl, tert.-Butyl, n-Penty, 2-Pentyl, 3-Pentyl, bevorzugt Ethyl, n-Propyl, Isopropyl, n-Butyl, Isobutyl, tert.-Butyl. Die oberflächenaktiven Substanzen werden üblicherweise in Mengen von 0,01 bis 5 Gew.-%, bezogen auf 100 Gew.-% der insgesamt eingesetzten, gegenüber Isocyanaten reaktiven Verbindungen, angewandt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)-phosphat, Tris-(2,3-dibrompropyl)phosphat, Tetrakis-(2-chlorethyl)ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Erhöhen der Flammfestigkeit der Präpolymer bzw. der Klebstoffzusammensetzung verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten, gegenüber Isocyanaten reaktiven Verbindungen, zu verwenden.

Eine erfindungsgemäße Klebstoffzusammensetzung oder ein erfindungsgemäßer Verbund läßt sich im Hoch-, Tief-, Schiffs-, Fahrzeug- oder Flugzeugbau, vorzugsweise im Hoch- oder Tiefbau verwenden. Zudem läßt sich die erfindungsgemäße Klebstoffzusammensetzung in Keilzinkenverleimungen verwenden. Derartige Keilzinkungen weisen vorzugsweise einen Abstand zwischen den Flankenflächen der miteinander keilgezinkten Bretter im Bereich von 0,05 bis 0,2 mm, bevorzugt 0,09 bis 0,13 mm auf.

Weiterhin betrifft die Erfindung Hoch-, Tief-, Schiffs-, Fahrzeug- oder Flugzeugbauten, die eine Klebstoffzusammensetzung oder einen Verbund oder beides aufweisen.

Die Erfindung wird nun anhand nicht limitierender Beispiele erläutert:

### Beispiele

Die Klebstoffzusammensetzungen gemäß der nachfolgenden Tabellen wurden mit den in den nachfolgend beschriebenen Herstellungsverfahren synthetisierten Präpolymeren erhalten.

### Präpolymer A

59,4 Teile Monomer-MDI, ein Gemisch aus 50 - 54 Teilen 2,4'- und 46 - 50 Teilen 4,4'-Diphenylmethandiisocyanat (MDI), wurden unter trockener Atmosphäre in einem heiz-/kühlbaren und mit Rührer ausgestatteten Behälter vorgelegt. Bei einer Produkttemperatur von 80 °C wurde langsam unter Rühren 40,6 Teile eines Polyolgemisches aus einem Polypropylenglykol mit einem mittleren Molekulargewicht von 1.000 und einem Polyethertriol mit einem mittleren Molekulargewicht von 4.000 zugegeben. Das Polyolgemisch hat eine OH-Zahl von 73 mg KOH/g. Nach Beendigung der Zugabe und einer Nachrührphase von 1 h wurde das Präpolymer auf Raumtemperatur abgekühlt und abgefüllt.

Das Präpolymer hat einen NCO-Gehalt von 17,5 % und eine Viskosität von 750 mPas.

### Präpolymer B

53,0 Teile Monomer-MDI, ein Gemisch aus 50 - 54 Teilen 2,4'- und 46 - 50 Teilen 4,4'-Diphenylmethandiisocyanat (MDI), wurden unter trockener Atmosphäre in einem heiz-/kühlbaren und mit Rührer ausgestatteten Behälter vorgelegt. Bei einer Produkttemperatur von 80 °C wurde langsam unter Rühren 47,0 Teile eines Polyolgemisches aus einem Polypropylenglykol mit einem mittleren Molekulargewicht von 1.000 und einem Polyethertriol auf Aminbasis mit einem mittleren Molekulargewicht von 4.000 zugegeben. Das Polyolgemisch hat eine OH-Zahl von 73 mg KOH/g. Nach Beendigung der Zugabe und einer Nachrührphase von 1 h wurde das Präpolymer auf Raumtemperatur abgekühlt und abgefüllt.

Das Präpolymer hat einen NCO-Gehalt von 15,0 % und eine Viskosität von 1.200 mPas.

### Herstellung der Klebstoffzusammensetzungen

Die Herstellung der Vergleichs-Klebstoffzusammensetzungen, wie sie in Tabelle 1 (Beispiele 1 und 2) beschrieben sind, erfolgte nach folgendem Verfahren:

In einem mit Ankerrührer und Dissolver ausgerüsteten Behälter wurde unter trockener Atmosphäre die entsprechende Menge des Präpolymer vorgelegt. Anschließend wurde der Reihe nach der Aktivator und gegebenenfalls die Zusatzmittel und Hilfsstoffe hinzugegeben und mit dem Dissolver bei möglichst hohen Drehzahlen homogenisiert.

Die Herstellung der erfindungsgemäßen Klebstoffzusammensetzung, wie sie in Beispiel 3, 4 und 5 der Tabelle 1 beschrieben ist, erfolgte nach folgendem Verfahren:

Entweder wurde nach der Herstellung des Präpolymers, wie es beispielhaft oben beschrieben wurde, nach der Nachrührphase, aber vor dem Abkühlen, die entsprechende Menge an Aktivator zugegeben oder es wurde in einem der Herstellung des Präpolymers nachfolgenden Schritt in einem mit einem Rührer ausgerüsteten Behälter unter trockener Atmosphäre die entsprechende Menge des Präpolymers vorgelegt und bei Raumtemperatur die entsprechende Menge des Aktivators zugegeben und anschließend die Mischung mit dem Rührer homogenisiert.

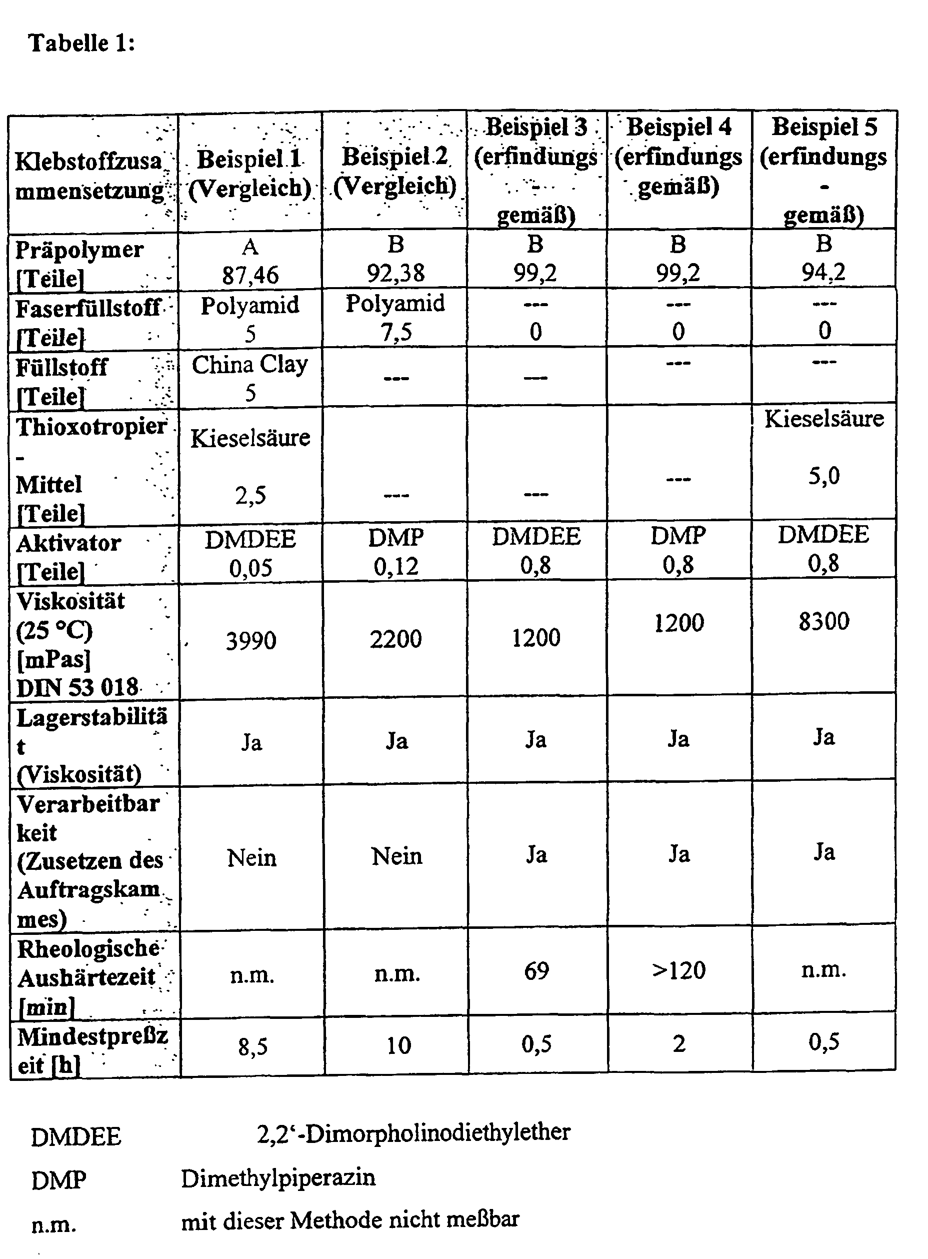

### Lagerstabilität:

Die Lagerstabilität wird über die Viskosität der Klebstoffzusammensetzung bestimmt. Lagerstabilität liegt erfindungsgemäß demnach vor, wenn in einem Alterungs-Schnelltest die Viskosität der Klebstoffzusammensetzung nach der Lagerung von 4 Wochen bei 60 °C unter Ausschluß von Luft und Feuchtigkeit nicht mehr als 20 % im Vergleich zum Anfangswert angestiegen ist.

### Verarbeitbarkeit:

Verarbeitbarkeit liegt dann vor, wenn nach einer Produktionsperiode von 8 Stunden am Auftragskamm keine Ablagerungen sichtbar sind.

### Rheologische Aushärtezeit:

Das Aushärtungsverhalten wurde mit dem Viskosimeter Haake RS 100 bei 20 °C im Oszillationsmodus verfolgt. Als "Aushärtezeit" wird die Zeit bezeichnet, nach der eine komplexe Viskosität von 5*10⁶ mPas erreicht wird.

Die Zahlenwerte in Tabelle 2 sind die durch Längszugscherprüfung gemäß DIN EN 302 Teil 1 nach den Behandlungen A1, A4 beziehungsweise A5 (Prüfzyklen gemäß DIN EN 301 Anhang A) bestimmbaren Werte für die Klebefestigkeit in N/mm² (Mindestanforderungen gemäß DIN EN 301 Abschnitt 5.2 beziehungsweise für den Klebstoff gemäß Beispiel 3 tatsächlich ermittelte Werte).

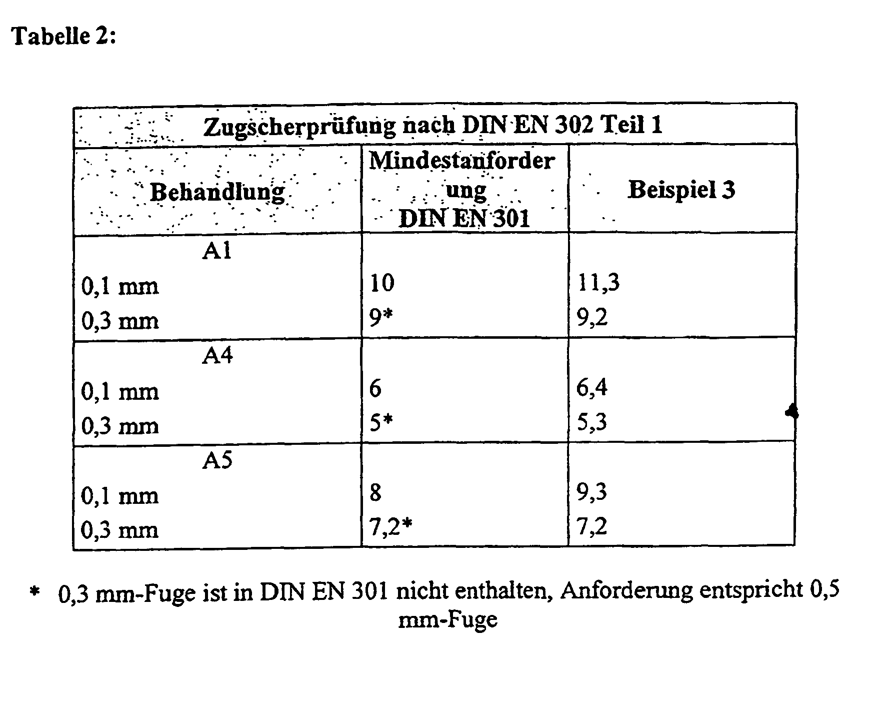

## Patentansprüche

1. Lösungsmittelarme Klebstoffzusammensetzung, als Bestandteile mindestens enthaltend:
- bis zu 99,999 Gew.-% der Klebstoffzusammensetzung eines Präpolymers, erhältlich aus mindestens einer eine gegenüber Isocyanaten reaktive Verbindung aufweisenden Komponente A und mindestens einer ein Isocyanat aufweisenden Komponente B,
- 0 bis 20 Gew.-% übliche Zusatz- und Hilfsstoffe,
- 0,001 bis 10 Gew.-% mindestens eines Morpholinderivats als Aktivator, wobei
(a) das Präpolymer folgende Untermerkmale aufweist:
(i) einen NCO-Gehalt von 5 bis 30 Gew.-%, bezogen auf das Präpolymer,
(ii) eine Viskosität bei 25 °C im Bereich von 300 bis 15000 mPas,
(b) die Komponente A folgende Untermerkmale aufweist::
(i) Komponente A enthält mindestens ein Diol,
(ii) die OH-Zahl der Komponente A liegt im Bereich von 10 bis 500 KOH/g,
wobei in der Klebstoffzusammensetzung kein Füllstoff enthalten ist und die Viskosität der Klebstoffzusammensetzung bei 25°C im Bereich von 300 bis 15000 mPas liegt.

2. Verfahren zur Herstellung einer Klebstoffzusammensetzung nach Anspruch 1, wobei die in Anspruch 1 definierten Bestandteile miteinander in Kontakt gebracht werden.

3. Klebstoffzusammensetzung, erhältlich durch Inkontaktbringen der in Anspruch 1 definierten Bestandteile.

4. Klebstoffzusammensetzung nach einem der Ansprüche 1 oder 3 mit mindestens einer der folgenden Materialeigenschaften (B) bis (F):
(B) rheologische Aushärtezeit im Bereich von 10 bis 150 Minuten,
(C) Lagerstabilität von 1 bis 4 Monaten,
(D) NCO-Gehalt im Bereich von 3 bis 30 Gew.-%, bezogen auf die Klebstoffzusammensetzung,
(E) Mindespreßzeit gemäß DIN 68141 im Bereich von 15 bis 150 Minuten.

5. Verbund, mindestens enthaltend ein Substrat und eine Klebstoffzusammensetzung nach einem der Ansprüche 1, 3 oder 4.

6. Verbund nach Anspruch 5, mit mindestens einer der folgenden Materialeigenschaften:
(F) eine Biegefestigkeit nach den Durchführungsrichtlinien der Gütegemeinschaft BS-Holz RAL RG 421 im Bereich von 20 bis 70 N/mm²,
(G) eine Delaminierungsbeständigkeit nach DIN EN 302 Teil 2 von maximal 5 %, nach DIN EN 301,
(H) eine Trockenscherfestigkeit im Bereich von mindestens 6 N/mm² bis Substratbruch nach den Güterichtlinien der RAL-Gütegemeinschaft Holzleimbau.

7. Verbund nach Anspruch 5 oder 6, wobei ein mindestens Holz enthaltendes Substrat schicht- oder keilzinkenverleimt, oder beides, wird.

8. Verwendung einer Klebstoffzusammensetzung nach einem der Ansprüche 1, 3 oder 4 oder eines Verbundes nach einem der Ansprüche 5 bis 7 im Hoch-, Tief-, Schiffs-, Fahrzeug- oder Flugzeugbau, vorzugsweise in Keilzinkenverleimungen.

9. Hoch-, Tief-, Schiffs-, Fahrzeug- oder Flugzeugbauten aufweisend eine Klebstoffzusammensetzung nach einem der Ansprüche 1, 3 oder 4 oder einen Verbund nach einem der Ansprüche 5 bis 7.

## Claims

1. A low-solvent adhesive composition comprising at least:
- up to 99.999% by weight of the adhesive composition of a prepolymer obtainable from at least one component A comprising an isocyanate-reactive compound and at least one component B comprising an isocyanate,
- from 0 to 20% by weight of customary additives and auxiliaries,
- from 0.001 to 10% by weight of at least one morpholine derivative as activator,
where
(a) the prepolymer has the following subsidiary features:
(i) an NCO content of from 5 to 30% by weight, based on the prepolymer,
(ii) a viscosity at 25°C in the range from 300 to 15 000 mPas;
(b) the component A has the following subsidiary features:
(i) the component A comprises at least one diol,
(ii) the OH number of the component A is in the range from 10 to 500 mg KOH/g,
in which the adhesive composition comprises no filler and the viscosity of the adhesive composition (at 25°C) is in the range from 300 to 15 000 mPas.

2. A process for preparing an adhesive composition as claimed in claim 1, wherein the constituents defined in claim 1 are brought into contact with one another.

3. An adhesive composition obtainable by bringing into contact the constituents defined in claim 1.

4. An adhesive composition as claimed in either of claims 1 and 3, comprising at least one of the following material properties (B) to (F):
(B) rheological curing time in the range from 10 to 150 minutes,
(C) storage stability of from 1 to 4 months,
(D) NCO content in the range from 3 to 30% by weight, based on the adhesive composition,
(E) minimum pressing time in accordance with DIN 68141 in the range from 15 to 150 minutes.

5. A composite at least comprising a substrate and an adhesive composition as claimed in any of claims 1, 3 and 4.

6. A composite as claimed in claim 5, comprising at least one of the following material properties:
(F) a flexural strength in accordance with the procedural guidelines of the Gütegemeinschaft BS-Holz [Glulam quality association] RAL RG 421 in the range from 20 to 70 N/mm²,
(G) a delamination resistance in accordance with DIN EN 302 Part 2 of not more than 5% in accordance with DIN EN 301,
(H) a dry shear strength in the range from at least 6 N/mm² up to substrate fracture in accordance with the quality guidelines of the RAL-Gütegemeinschaft Holzleimbau.

7. A composite as claimed in claim 5 or 6, wherein a substrate comprising at least wood comprises glued layer(s) or glued finger joint(s), or both.

8. The use of an adhesive composition as claimed in any of claims 1, 3 and 4 or of a composite as claimed in any of claims 5 to 7 in building construction, civil engineering, marine, automotive or aircraft construction, preferably in glued finger joints.

9. A building construction, civil engineering, marine, automotive or aircraft structure, comprising an adhesive composition as claimed in any of claims 1, 3 and 4 or a composite as claimed in any of claims 5 to 7.

## Revendications

1. Composition adhésive pauvre en solvant, contenant, comme éléments, au moins :
- jusqu'à 99,999 % en poids de la composition adhésive d'un prépolymère que l'on peut obtenir à partir d'au moins un composant A présentant un composé réactif vis-à-vis des isocyanates et d'au moins un composant B présentant un isocyanate,
- 0 à 20 % en poids d'additifs et d'adjuvants courants,
- 0,001 à 10 % en poids d'au moins un dérivé de morpholine, comme activateur,
(a) le prépolymère présentant les sous-particularités suivantes :
(i) une teneur en NCO de 5 à 30 % en poids, par rapport au prépolymère,
(ii) une viscosité à 25°C de l'ordre de 300 à 15 000 mPas,
(b) le composant A présentant les sous-particularités suivantes :
(i) le composant A contient au moins un diol,
(ii) l'indice de OH du composant A est de l'ordre de 10 à 500 KOH/g,
aucune matière de remplissage n'étant contenue dans la composition adhésive et la viscosité de la composition adhésive étant à 25°C de l'ordre de 300 à 15 000 mPas.

2. Procédé de préparation d'une composition adhésive suivant la revendication 1, dans lequel les éléments définis dans la revendication 1 sont mis en contact mutuel.

3. Composition adhésive que l'on peut obtenir par mise en contact des éléments définis dans la revendication 1.

4. Composition adhésive suivant l'une des revendications 1 ou 3, comprenant au moins une des propriétés de matière suivantes (B) à (F) :
(B) un temps de durcissement rhéologique de l'ordre de 10 à 150 minutes,
(C) une stabilité à l'entreposage de 1 à 4 mois,
(D) une teneur en NCO de l'ordre de 3 à 30 % en poids, par rapport à la composition adhésive,
(E) un temps de pressage minimal conformément à la norme DIN 68141 de l'ordre de 15 à 150 minutes.

5. Composite, contenant au moins un substrat et une composition adhésive suivant l'une des revendications 1, 3 ou 4.

6. Composite suivant la revendication 5, présentant au moins une des propriétés de matière suivantes :
(F) une résistance à la flexion selon les directives de mise en oeuvre de la Gütegemeinschaft BS-Holz RAL RG 421 de l'ordre de 20 à 70 N/mm²,
(G) une résistance au décollement interlaminaire selon la norme DIN EN 302 Section 2 d'au maximum 5 %, selon la norme DIN EN 301,
(H) une résistance au cisaillement à sec de l'ordre d'au moins 6 N/mm² jusqu'à la rupture du substrat selon les directives de RAL Gütegemeinschaft Holzleimbau.

7. Composite suivant la revendication 5 ou 6, dans lequel un substrat contenant au moins du bois est collé de manière stratifiée ou par dents ou les deux.

8. Utilisation d'une composition adhésive suivant l'une des revendications 1, 3 ou 4 ou d'un composite suivant l'une des revendications 5 à 7, dans la construction de bâtiments, les travaux de génie civil, la construction de navires, de véhicules ou d'avions, de préférence dans des assemblages par dents collées.

9. Constructions de bâtiments, travaux de génie civil, constructions de navires, de véhicules ou d'avions, présentant une composition adhésive suivant l'une des revendications 1, 3 ou 4, ou un composite suivant l'une des revendications 5 à 7.
